Europäisches Patentamt

European Patent Office

Office européen des brevets

(19)

(11) Publication number: 0 257 745
A2

# (12) EUROPEAN PATENT APPLICATION

(21) Application number: 87305890.3

(22) Date of filing: 03.07.87

(51) Int. Cl.⁴: G06F 15/74

(30) Priority: 08.08.86 GB 8619345

(43) Date of publication of application:
02.03.88 Bulletin 88/09

(84) Designated Contracting States:
DE FR GB IT

(71) Applicant: ROLLS-ROYCE plc
65 Buckingham Gate
London, SW1E 6AT(GB)

(72) Inventor: Bousfield, Bruce Martin
136 Albert Road
Chaddesden Derby(GB)

(74) Representative: Dargavel, Laurence Peter
Rolls-Royce PLC Patents Department P.O.
Box 31 MoorLane
Derby DE2 8BJ(GB)

(54) Data processing.

(57) To facilitate real-time monitoring of dynamic parameters, e.g. for testing of gas turbine aeroengines, a microprocessor-based unit comprises at least one data acquisition card (A) functioning in parallel with a data processing card (B). The data acquisition card (A) includes components (16,18) which receive analogue signals (12a), sample and digitise them, and use them to continually update a microprocessor ring buffer (20). Blocks of signals are transferred from the ring buffer (20) to a second microprocessor (30) on the other card (B), which processes the data using a suitable algorithm. Processed data is passed to a third microprocessor (40) on the same card (B) for data reduction using a further algorithm, the reduced data being output for evaluation and/or recordal, e.g. in a host computer (C). The third microprocessor (40) controls the dynamic range and sampling rate of the data input to the ring buffer (20) as well as data transfer between cards, and gives priority to updating the ring buffer (20). In a preferred embodiment the data processing card (B) can be connected to sixteen or more data acquisition cards (A), which it interrogates sequentially.

EP 0 257 745 A2

## DATA PROCESSING

This invention relates to data processing apparatus and in particular to such apparatus that is capable of real time operation.

It is often desirable to collect, process and extract data in real time for monitoring an ongoing process or the operation of a machine. For example, when running an engine on a test bed it is generally more effective to process the information being monitored while the engine is running, in particular to allow the test schedule to be adjusted in the knowledge of the results being obtained, so perhaps avoiding a re-run. However, without extremely large processing and computing resources such a technique can only be employed to a limited extent, and on that account it is impractical in many instances to do more than record the test data and process it subsequently. Real time monitoring of dynamic parameters, i.e. of oscillatory or vibratory modes, is usually only possible with the use of expensive and dedicated equipment such as analogue sweep filters which may be cumbersome and difficult to accommodate on a test rig, and also has the disadvantage of requiring complex and time-consuming calibration.

It is an object of the present invention to make it unnecessary to employ such equipment and to provide a more economical and/or convenient means for real time data processing.

According to one aspect of the invention there is provided a real time data processing apparatus comprising a first microprocessor unit having means for receiving at least one analogue input and producing a sequence of digital data from said input or inputs, a second microprocessor unit for processing said digital data in accordance with a predetermined algorithm, and a third microprocessor unit for controlling the operations of said first and second microprocessor units, performing a data reduction algorithm upon said processed data and outputting the results for evaluation and/or recordal.

According to a more specific aspect of the present invention, the apparatus comprises a series of data input means for receiving respective analogue inputs and converting said inputs to digital signals, a first microprocessor unit for ordering said digital signals from at least one said input means and outputting the signals to a second microprocessor unit having means for processing with at least one predetermined algorithm the signals from said first unit, and a third microprocessor unit for accessing the processed data from said second unit and having means for performing a data reduction algorithm upon said processed data and for outputting the results for evaluation and/or recordal, said third unit being arranged to control the data inputs from the first to the second unit and from the second to the third unit.

According to another more specific aspect of the present invention, the apparatus comprises a first microprocessor unit and means for inputting digital data to said first unit in the form of a series of values of a dynamic parameter under measurement, said first unit being arranged to store a sequence of said values, a second microprocessor unit arranged to access said first unit and means to read out to the second unit groups of values from said sequence, the second unit having means for operating on said groups of values in accordance with a predetermined algorithm to produce a processed data output, and a third microprocessor unit receiving said processed data output and provided with means for performing a data reduction algorithm upon said processed data and for outputting the results for evaluation and/or recordal, said third unit being arranged to control the cycle of operation of the data inputting means and the first and second units.

The third microprocessor unit can be arranged to interface with a host computer which processes further the reduced data output from the unit and through which alternative programmes can be inputted through the data processing means. It may be arranged that more than one data processing apparatus according to the invention is connected to the host computer for parallel real time operation.

In a preferred form of the data processing means according to the invention, the hardware is carried on different cards depending upon whether it serves the function of data acquisition or of data processing and reduction. It can be arranged that a plurality of data acquisition cards, each carrying a respective first microprocessor unit and providing for the input of different parameters, are connected to a common data processing and reduction card carrying the second and third microprocessor units, the third unit then also sequencing the access of digital data from the first units of the individual acquisition cards to said second unit on the data processing and reduction card.

An example of the invention will be described in more detail with reference to the accompanying drawings, in which:

Fig. 1 is a block diagram of a data processing apparatus according to the invention,

Fig. 2 is a diagram showing in more detail a part of the apparatus in Fig. 1, and

Fig. 3 illustrates the provision of a series of acquisition cards in the apparatus of Fig. 1.

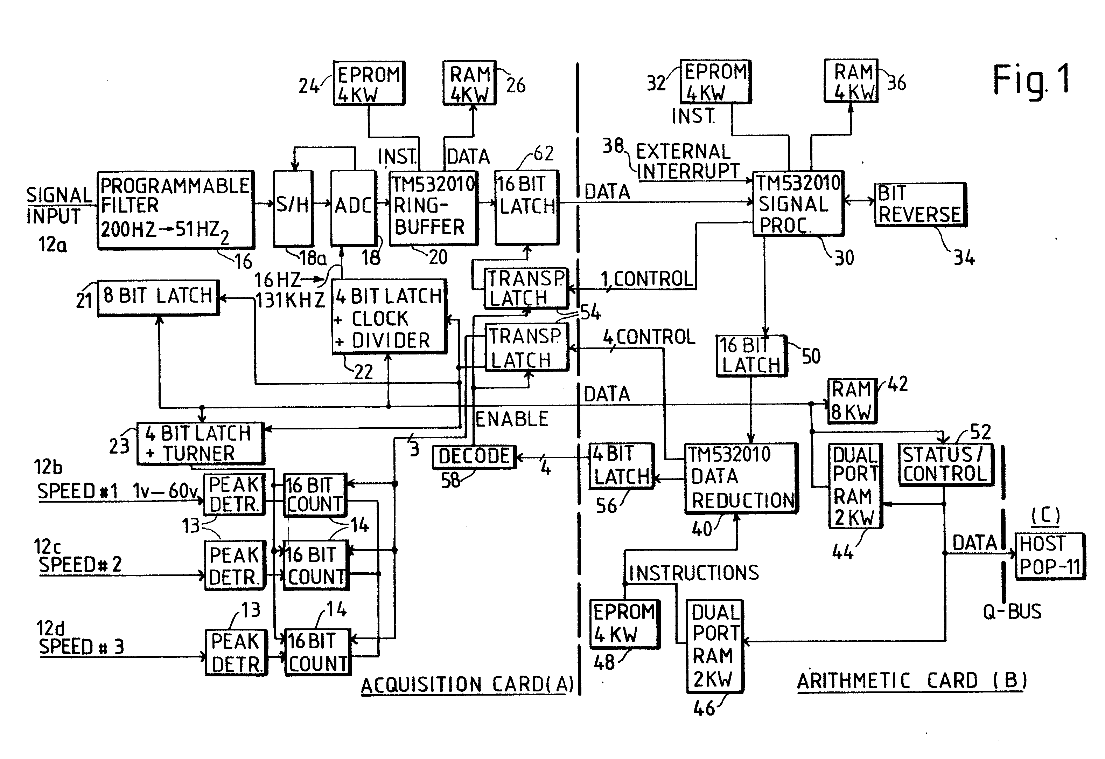

Fig. 1 illustrates schematically the apparatus mounted on two separate cards A and B which are able to sit on the bus of a host computer C, the first (card A) providing the function of data acquisition and the second (card B) providing the arithmetical function of processing and reducing the data transferred to it from the card A. The cards carry three microprocessor units 20, 30, 40, each a TMS 32010 (manufactured by Texas Instruments Ltd.) in a pipeline architecture configuration. Data input channels are provided on the data acquisition card. The second card is shown operating under the control of the host computer C(which can be of conventional form and which effects any further processing, storage and display of the data required, whether or not in real time operation, but alternatively it can operate in stand-alone fashion.

The example illustrated in the drawings is intended specifically for monitoring and evaluating an oscillatory mode, such as vibration or flutter, in a three-shaft gas turbine. Sensors (not shown) on the engine provide respective analogue inputs of the oscillatory mode under investigation (on line 12a) and of the speeds of rotation of the three turbine shafts (on lines 12b, 12c, 12d). The shaft speed inputs are read by zero-crossing detectors 13 and counters 14. The oscillatory input signal of up to ± 5v is applied through the line 12a to a programmable low pass filter 16 (in the example, model VBF/33 by Kemo Limited) with a sharp cut-off value (135 dB/oct) that is adjustable in the range 200Hz to 50kHz via latch 21, this acting as an anti-aliasing filter to provide a signal that is not influenced by frequencies higher than half the sampling frequency.

The analogue output from the filter 16 is sampled and digitised by analogue-to-digital converter (ADC) 18 and an associated sample-and-hold (S/H) 18a, with a sampling frequency that is adjustably controlled by a clock logic unit 22 in the range 16Hz to 131kHz. The sequence of samples from the ADC is outputted to the first microprocessor unit 20. Under the control of EPROM 24, the unit 20 functions as a ring buffer storing the samples for the task being described, its internal store being supplemented by RAM 26 to provide capacity for 4096 16-bit samples from the ADC. The stored data is progressively overwritten by the continuing input from the ADC so that the ring buffer capacity is continuously updated.

Blocks of samples held by the ring buffer can be outputted via latch 62 to a signal processor provided by the second microprocessor unit 30, where the data can be transformed in a number of ways, as determined by the program held in EPROM 32 and a bit-reverse logic unit 34. Typically, in the evaluation of a vibratory parameter, the EPROM 32 may provide a Fast Fourier Transform algorithm for processing blocks of 1024 samples to produce a spectrum, the bit-reverse logic 34 being provided in this instance as a ten-bit bit-reverser specifically for a 1024 point FFT. Other algorithms can be applied by the second processor 30, such as F1R or 11R filters, correlation and various transforms. 4K RAM 36 supplements the internal store of the processor 30. The results of the applied algorithm are passed to the third unit 40 via latch 50 for further processing in the third unit.

An external-interrupt input 38 to the second unit 30 provides for synchronisation of the systems operation. The employment of this facility depends on the intended application: thus, in the turbine test procedure of the present example the second unit may be required to process data taken at particular points in the revolution of a shaft, and the algorithm in the unit 30 could then contain a trigger point which is set by the interrupt. Alternatively, it may be required to employ the external interrupt to synchronise several data processing systems so that the data from them can be correlated by a host computer.

The third microprocessor unit 40 effects reduction of the processed data output from the unit 30, e.g. for averaging and peak picking, but more generally in accordance with any of a variety of data reduction algorithms depending upon the purpose of a test. Its output can be transferred to the host computer C for further manipulation and recordal. The unit 40 can also interface with the host computer to regulate and synchronise the operation of the first and second microprocessor units 30, 40.

The third unit has access to an 8Kw RAM 42 for holding data and this is supplemented by one of a pair of dual port 2Kw RAMs 44, 46 which can be accessed by both the unit 40 and the host computer. The first of the RAMs 44 allows the host computer to upload the results of the data reduction. The second dual port RAM 46, allows the host computer to input alternative programs to those held in an EPROM 48 for input to the third unit 40.

Also accessible by both the third unit and the host computer is a status/control unit 52 having respective 8-bit sections for the alternative input/output directions between the third unit 40 and the host computer and being used to set flags to facilitate handshaking between these two units. Primarily it has one dedicated bit for an interrupt input from the third unit to the computer and two dedicated bits for inputting from the computer to the third unit (i) an interrupt, and (ii) a reset for the units 30 and 40. The remaining bits are available for application-related functions.

From the third unit 40 two control signals are sent to the data acquisition card A. The first is a 4-bit address select sent via a latch 56 on the card B to a decode logic 58 on the card A, and for any information transfer to occur between the cards A and B the address selected in logic 58 must correspond to the address outputted by the latch 56: this condition must be satisfited to cause the latches 54 to become transparent. The second control signal from the unit 40 is a 16-bit value sent to the units 21, 22, 23 to control filter band width, sample rate and counter period respectively. The third unit 40 can also read the values from the counters 14.

During the transfer of data from the first unit to the second unit, which is capable of operating at a rate of 25mS per 1024 word block, further data inputs from the ADC may continue to be generated and the latches are so arranged that the transfer is interrupted for such inputs so that the integrity of the buffered data is maintained. The capacity of the buffer store and the intrinsic high rate of data flow to the second unit allow these interrogations to be accommodated. The data reduction operations in the third unit can be performed in parallel with the processing operations in the second unit.

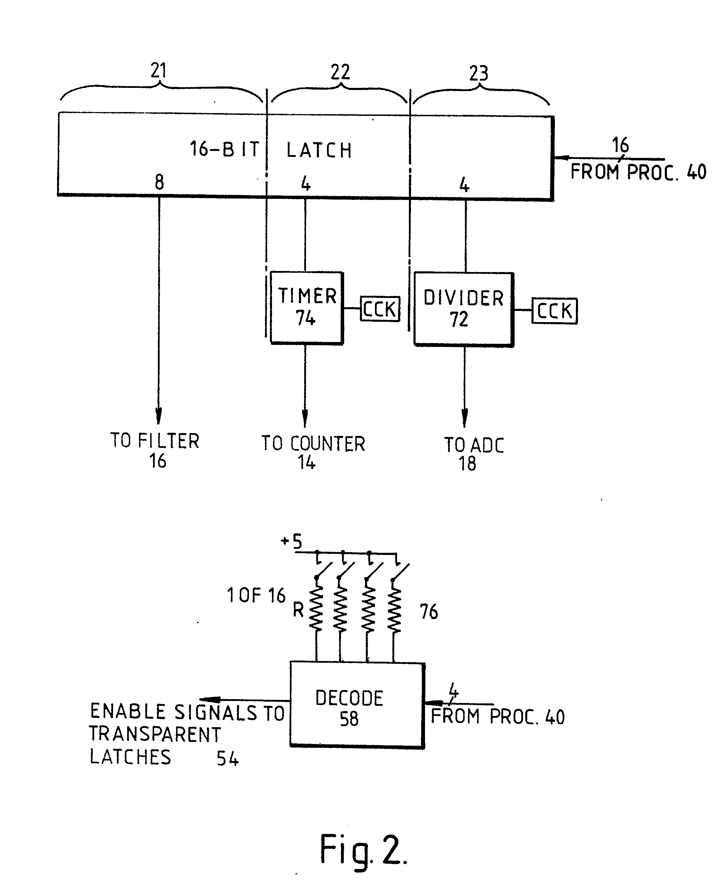

Fig. 2 illustrates in further detail features of the logic unit 21, 22, 23 and the decoder 58 through which they are enabled. The diagram shows the tripartite division of the 16-bit control signal from the third unit 40, consisting of an 8-bit instruction inputted to the filter 16 for setting the cut-off frequency, and two 4-bit instructions inputted one to the clock logic unit 22 (comprising a programmable divider 72 which determines the sampling frequency of the ADC 18) and the other to the timer logic unit 23 (comprising a programmable timer 74 which generates timing pulses for the counters 14).

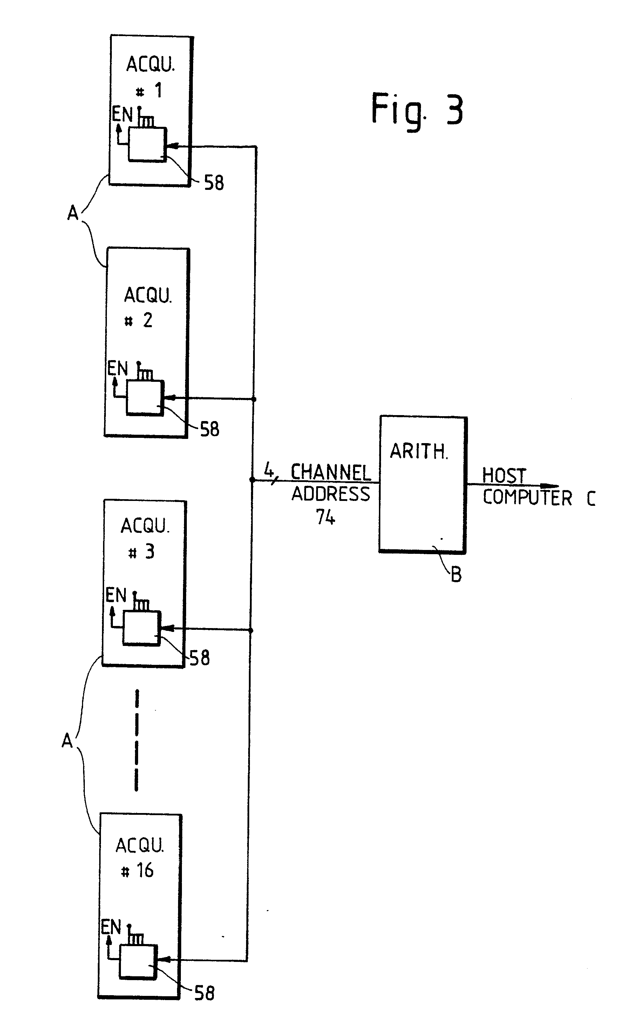

The operations initiated by the control signal and the transfer of data-blocks from the first unit 20 to the second unit 30 are regulated by the decoder 58 which, under the control of the third unit 40 as already mentioned, enables the transparent latches 54. The regulatory function of the decoder allows a number of data acquisition cards to be employed with a common arithmetic card. Fig. 3 indicates a bank of acquisition cards A coupled in parallel to the one arithmetic card B and shows how a channel address 74 from the third unit on the arithmetic card is connected to the decoders 58 of each of the acquisition cards. Each decoder has its own address select 76 (Fig. 2) so that the channel address signal of the third unit identifies and is inputted to a specific decoder. The third unit 40 on the arithmetic card can thus enable the functions of each acquisition card in turn.

Fig. 3 indicates a total of sixteen acquisition cards connected to the one arithmetic card, which is within the capacity of the apparatus when each acquisition card is sampling a dynamic variable on the channel 2a in the manner shown in Fig. 1. If non-dynamic variables are to be analysed, the maximum number of acquisition cards can be increased further (provided that the latch 56 and the decode logic 58 have been chosen so as to provide and discriminate between the different addresses of the individual acquisition cards), since the volume of data generated from each will generally be much smaller. It is, of course, possible for the apparatus to operate on a mixture of dynamic and non-dynamic variables

It should be apparent that while the illustrated example has been described in use as an engine test bed analyser, apparatus according to the invention is capable of monitoring a wide variety of data from machines and processes in general, its limits being determined by the volume of data to be handled rather than the specific source of that data or the specific algorithms to be used in processing the data. As further examples of its possible uses, pattern recognition and on-line image processing may be mentioned.

It has already been mentioned that a host computer can operate with more than one data processing apparatus as shown in Fig. 1. It is also possible to employ the apparatus without any host computer, the results from the data reduction algorithm being used to operate recording equipment, for example. At its simplest, the output from the third unit may only be required to actuate a visual and/or aural warning signal.

**Claims**

1. Real time data processing apparatus characterised in that it comprises a first microprocessor unit (20) having means (18,24) for receiving at least one analogue input (12a) and producing a sequence of digital data from said input or inputs, a second microprocessor unit (30) for processing said digital data in accordance with a predetermined algorithm, and a third microprocessor unit (40) for controlling the operations of said first and second microprocessor units, performing a data reduction algorithm upon said processed data and outputting the results for evaluation and/or recordal.

2. Real time data processing apparatus having a series of data input means (13,14,18) for receiving respective analogue inputs and converting said inputs to digital signals, characterised by a first microprocessor unit (20) for ordering said digital signals from at least one said input means (18) and outputting the signals to

a second microprocessor unit (30) having means (32,34) for processing with at least one predetermined algorithm the signals from said first unit, and a third microprocessor unit (40) for accessing the processed data from said second unit (30) and having means (48) for performing a data reduction algorithm upon said processed data and means (52) for outputting the results for evaluation and/or recordal,

said third unit (40) being provided with means - (54,56,58,62) for controlling the data inputs from the first unit (20) to the second unit (30).

3. Real time data processing apparatus having a first microprocessor unit (20) and means (18) for inputting digital data to said first unit (20) in the form of a series of values of a dynamic parameter under measurement, said first unit being arranged to store a sequence of said values, characterised by

a second microprocessor unit (30) arranged to access said first unit (20),

means (62) for reading out to the second unit (30) groups of values from said sequence, the second unit (30) having means (32,34) for operating on said groups of values in accordance with a predetermined algorithm to produce a processed data output, and

a third microprocessor unit (40) for receiving said processed data output and provided with means (48) for performing a data reduction algorithm upon said processed data and means (44,52) for outputting the results for evaluation and/or recordal, said third unit (40) being provided with means (22,46,48,52,54,56,58) for controlling the cycle of operation of the data inputting means (18) and the first and second units (20,30).

4. Apparatus according to claim 3 characterised by analogue data input means (16) for frequency values of a dynamic parameter in the form of a vibratory mode.

5. Apparatus according to claim 4 characterised in that the analogue data input means (16) comprises a programmable filter for adjustable limitation of the range of frequency values for the data input to the first unit (20).

6. Apparatus according to any one of claims 3 to 5 characterised by means (22) for adjusting a sampling rate of said values to be inputted to the first unit.

7. Apparatus according to any one of claims 3 to 6 characterised in that the first unit (20) comprises or forms part of a ring buffer having a storage capacity of said values substantially greater than the size of the groups of values to be read out to the second unit (30).

8. Apparatus according to any one of claims 3 to 7 characterised in that the second unit (30) is provided with bit-reverse logic means (34) for conversion of said frequency values in the second unit.

9. Apparatus according to any one of claims 3 to 8 characterised by further digital data input means (13,14) for the third unit (40), said further digital data input to the third unit bypassing said first and second units (20,30).

10. Apparatus according to any one of claims 3 to 9 characterised in that the third unit (40) is arranged to provide a control signal for means (18,22) acting on the first unit (20) to give priority to the data input to the first unit over the data output therefrom to the second unit (30).

11. Apparatus according to any one of the preceding claims characterised in that the third unit (40) has means for interfacing with a host computer (C), comprising means (44,52) for outputting the reduced data to the computer and means (46,52) for inputting programming data from the computer.

12. Apparatus according to any one of the preceding claims characterised in that the first unit (20) is mounted on a first circuit card (A) and the second and third units (30,40) are mounted on a second circuit card (B), input/output control means (54,56,58,62) being provided to control data transfer between said two cards and the second card having input/output means (44,46,52) for interfacing with a host computer (C).

13. Apparatus according to claim 12 wherein said circuit cards (A,B) are arranged to be mounted in the host computer bus.

14. Apparatus according to claim 12 or claim 13 comprising a plurality of circuit cards (A, Figure 3) each comprising a respective first microprocessor unit (20) and functioning as a data acquisition card, said data acquisition cards (A) being connected in parallel to a further card (B) carrying the second and third microprocessor units (30,40) and functioning as a data processing and reduction card, the respective data acquisition cards being arranged to be controlled from the third unit (40) on said further card (B) to sequence the access of data from the first units (20) of the individual acquisition cards (A) to said second unit (30) on the further card (B).

15. A method of processing data of a dynamic parameter in real time characterised in that analogue values of the parameter within a predetermined frequency range are converted into digital signals which are at a predetermined sampling rate in a ring buffer (20) where the oldest signals are continually overwritten to update the stored data and blocks of signals are transferred to a data processor (30) where they are operated on in accordance with a predetermined algorithm, the results of said processing then being subject to data reduction in a further data processor (40) which also outputs control signals determining the frequency range of said analogue values, the sampling rate of the digital values and the transfer of said blocks of signals from the ring buffer (20).

**Fig.1**

SIGNAL INPUT 12a — PROGRAMMABLE FILTER 200HZ→51HZ₂ — 16

S/H — ADC 18 — 18a — EPROM 4 KW 24 — RAM 4 KW 26 — TMS32010 RING-BUFFER 20 — INST. — DATA

16HZ–131KHZ — 4 BIT LATCH + CLOCK + DIVIDER 22

8 BIT LATCH 21

16 BIT LATCH 62

EPROM 4 KW INST. 32 — RAM 4 KW 36 — TMS32010 SIGNAL PROC. 30 — BIT REVERSE 34 — 38 EXTERNAL INTERRUPT — DATA

1 CONTROL — TRANSP. LATCH 54 — TRANSP. LATCH — 4 CONTROL

16 BIT LATCH 50 — RAM 8 KW 42 — DATA

TMS32010 DATA REDUCTION 40 — 4 BIT LATCH 56 — INSTRUCTIONS — ENABLE — 4 — DECODE 58 — 3

STATUS/CONTROL 52 — DUAL PORT RAM 2 KW 44 — DATA — (C) HOST POP-11 — Q-BUS

DUAL PORT RAM 2 KW 46 — EPROM 4 KW 48

ARITHMETIC CARD (B)

ACQUISITION CARD (A)

4 BIT LATCH + TURNER 23

SPEED #1 12b — 1v–60v — PEAK DETR. 13 — 16 BIT COUNT 14

SPEED #2 12c — PEAK DETR. 13 — 16 BIT COUNT 14

SPEED #3 12d — PEAK DETR. — 16 BIT COUNT

Fig. 2.

Fig. 3